Europäisches Patentamt

European Patent Office

Office européen des brevets

(11) Publication number: **0 237 993**
A1

## EUROPEAN PATENT APPLICATION

(21) Application number: **87103707.3**

(22) Date of filing: **13.03.87**

(51) Int. Cl.³: **B 60 B 1/00**
B 60 B 23/04, B 60 B 23/10
B 60 B 1/08

(30) Priority: **17.03.86 IT 2125586 U**

(43) Date of publication of application:
**23.09.87 Bulletin 87/39**

(84) Designated Contracting States:
**AT BE CH DE ES FR GB LI LU NL**

(71) Applicant: **COSTRUZIONI MECCANICHE RHO S.p.A.**
**Via Enrico Mattei, 13**
**I-20017 RHO (Milan)(IT)**

(72) Inventor: **Gallese, Luigi**
**Via Carlo de Cristofori, 13**
**I-20100 Milan(IT)**

(74) Representative: **Dr. Ing. A. Racheli & C.**
**Viale San Michele del Carso, 4**
**I-20144 Milano(IT)**

(54) Spoked wheel for tubeless tyres and construction method thereof.

(57) The spoked wheel of this invention has a rim carried out in two parts (21, 26), one (21) of which is continuous and airtight and has the seats (22) for the tubeless tyre so as to carry out the seal with the same, while the other (26) is provided with holes (31) for the spokes (R). Both parts are carried out in aluminium alloy and they each comprise a coupling device (24, 27) and a locking device (25, 28, 29, 30) which centers the two parts one with respect to the other.

The locking device may be formed in particular of a groove (24) and a tooth (27).

The locking device may consist of a screw (29) which enters two holes (25, 28) which face each other and are each foreseen on one of the two parts (21, 16), the screw being locked by a nut (30).

FIG. 2

*1*

Applicant

COSTRUZIONI MECCANICHE RHO S.p.A.

Via Enrico Mattei, 13

20017 RHO (Milan) Italy

## "SPOKED WHEEL FOR TUBELESS TYRES AND CONSTRUCTION METHOD THEREOF"

The present invention relates to the spoked wheels which are normally used to lend greater elasticity to the vehicle, as well as a more elegant appearance.

Spoked wheels are usually mounted by making a hole at the two fixing points, that is both in the rim and in the hub. This type of construction therefore obliges the user of spoked wheels to adopt tyres with inner tubes. Nowadays, however, there is an ever-increasing preference for tubeless tyres, which have several advantages over those with inner tubes.

US-A-4.275.931 is known which provides a steel rim in two parts, one for carrying out the seal with the tubeless tyre and the other for fixing the spokes. In this case, the centering of the wheel must be manually carried out by selectively pulling the spokes; this involves costs due to the labour which must be carried out by a very skilled person and unreliable final precision due to the fact that this individual capacity of the worker. However, in any case, it is impossible to reach a precision better than 0,5 mm.

With this embodiment, since a part is fixed to the other by means of welding, the possible replacement of a spoke involves the complete disassembling of the wheel or making a hole in the airtight part in order to replace the nipples. In this latter case, the wheel is no longer airtight therefore the tubeless tyre must be replaced with a normal tube tyre.

Furthermore DE-A-3.028.827 is also known. It describes a spoked wheel carried out in two parts which are assembled one with the other. However, the seal is obtained by means of a gasket positioned between both parts. It is as time passes subject to wear due to the vibration of the tyre and the heat which develops during use. If one of the spokes breaks in order to replace it the whole wheel must be disassembled including the tyre and the two parts forming the rim will have to be divided. Therefore, this work takes a long time and is expensive.

The object of the present invention is to provide a spoked wheel for tubeless tyres the assembling of which is simple, fast and perfect; its seal lasts for a long time and is secure and the possible replacement of a spoke can be done without disassembling the wheel.

The aforementioned purpose has been achieved by designing a rim split into two matching parts, one of which is continuous and can therefore carry out the seal, while the other is such that it can accommodate the seats for the spokes both parts are in aluminium and have a coupling device and reciprocal locking device.

In a preferred embodiment, furthermore, the coupling device is formed of a groove and a tooth which are inserted one in the other.

A further preferred embodiment provides that the locking device is formed of holes facing each other inside which a screw penetrates that is locked by a nut.

The construction method of the wheel of this invention foresees that the spokes between the hub and the inner part are mounted by pulling them in a uniform way, then the areas of the two parts which will be joined together are machined and the two parts are joined and fixed forming the finished wheel. In this way, the manual centering of the wheel is eliminated, a much higher precision is obtained better than the one that can be obtained with another construction or other processes.

The present invention will now be described on the basis of an exemplary embodiment which is illustrated in the attached drawings, in which:

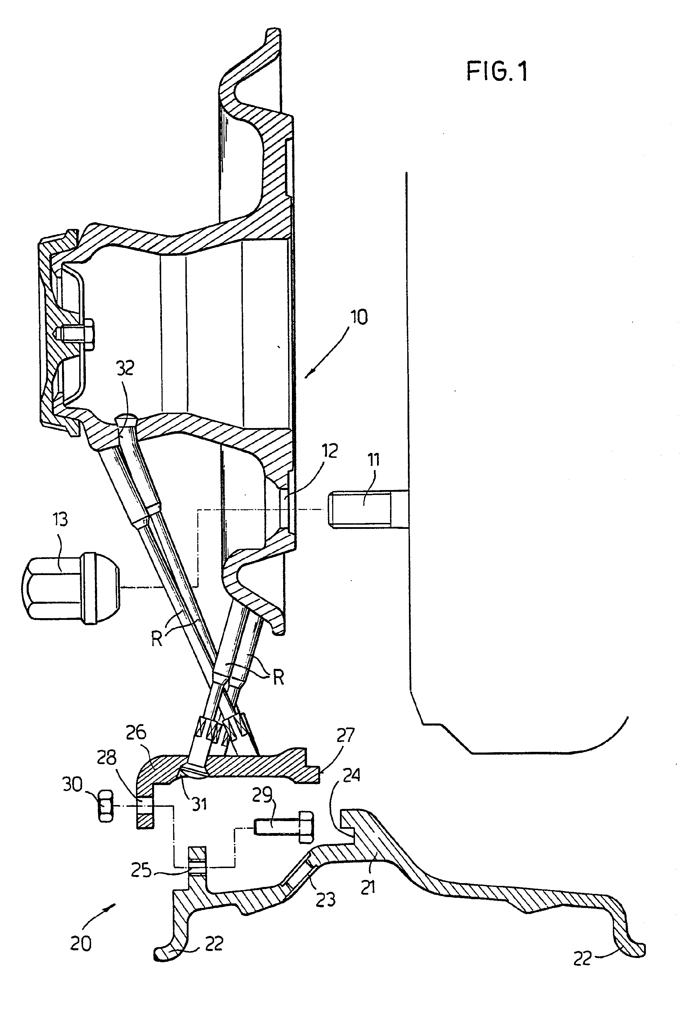

Fig. 1 shows an exploded sectional view of the proposed wheel;

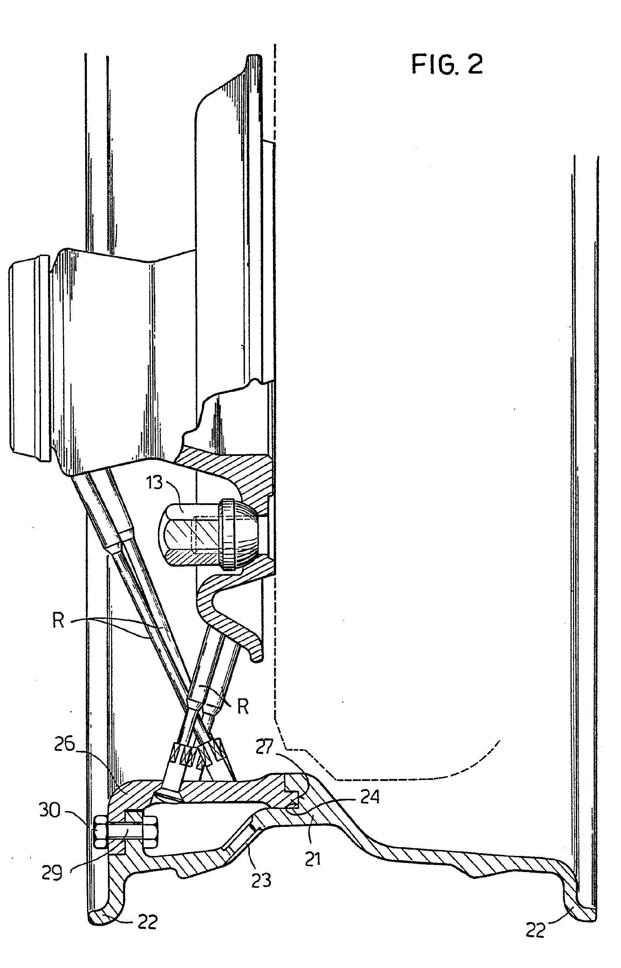

Fig. 2 also shows a sectional view, but of a mounted wheel.

With reference to the drawings it will be noted that the proposed wheel comprises a hub 10 which is such that it can be locked onto the studs 11 which enter holes 12 in the hub and are fixed by bolts 13. The hub construction is of a conventional type.

The rim, indicated as a whole by 20, comprises two parts: an outer part marked 21 which bears the seats 22 for the tubeless tyre. The whole surface of part 21 is perfectly unbroken and airtight; it is provided only with a hole 23 for the valve. This part 21 can thus carry out a perfect seal with the tubeless tyre which is not shown.

Part 21 of the rim is furthermore provided with a coupling device, consisting for example of a circular groove 24 and a locking device consisting for example of a threaded hole 25.

The inner part 26 of the rim is provided with a matching coupling device (for example a tooth 27) which fits into the coupling device 24 and a matching locking device 28 mating with the locking device 25 into which a bolt 29 fixed by a nut 30 can be inserted. Onto this second part 26 are fixed the spokes R which, as it is known, are mounted using holes 31 and 32 which are made in the second part 26 of the rim and in the hub 10 respectively.

Assembly of this wheel is accomplished by simply mounting all the spokes R between the hub 10 and part 26 of the rim pulling them in a uniform way, machining the two parts: the inner part 26 and the outer part 21 in correspondence with the reciprocal coupling areas, then the screws 29 are inserted into the threaded holes 25, then part 26 is mounted inside part 21 of the rim, making the matching piece 27 fit into the coupling device 24 and the screws 29 into the holes 28, after which the nuts 30 are tightened. The wheel thus mounted can accommodate a tubeless tyre. It is very precise as regards the eccentricity and skidding. In particular, it reaches an accuracy that can be compared to the one of the aluminium alloy wheels without spokes.

COSTRUZIONI MECCANICHE RHO S.p.A.

20017 RHO (Milan) Italy

C L A I M S

1.    A spoked wheel which can accommodate tubeless tyres in which the rim is carried out in two parts (21, 26), one (21) of which is continous and airtight and has the seats (22) for the tubeless tyre so as to carry out the seal with the same, while the other (26) is provided with the holes (31) for the spokes (R), characterized in that the two parts (21, 26) are carried out in aluminium alloy and they each comprise a coupling device (24, 27) and a locking device (25, 28, 29, 30) which centers the two parts one with respect to the other.

2.    A wheel according to claim 1, characterized in that the coupling device consists of a groove (24) and a tooth (27).

3.    A wheel according to claim 1 or 2 characterized in that the locking device consists of a screw (29) which enters two holes (25, 28) which face each other and are each situated on one of the two parts (21, 26), the screw being locked by a nut (30).

4.    A process for the construction of a spoked wheel for tubeless tyres according to which all the spokes (R) are mounted between the hub and the innermost part (26) and they are pulled in a uniform way, then the reciprocal coupling areas of the two parts are machined and these parts are joined together.

1/2

0237993

FIG.1

FIG. 2

# 0237993

## EUROPEAN SEARCH REPORT

European Patent Office

EP 87 10 3707

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | FR-A- 663 312 (PUGH) <br> * Figures 3-5,7-9; page 4, lines 30-61 * | 1 | B 60 B 1/00 <br> B 60 B 23/04 <br> B 60 B 23/10 <br> B 60 B 1/08 |
| A | * Page 6, lines 1-19 * <br><br> --- | 2-4 | |
| Y | FR-A-1 574 909 (FONDERIE DE PRECISION) <br> * Page 3, line 4 - page 4, line 20; figures 1,3 * <br><br> --- | 1 | |
| A | US-A-3 008 770 (MUELLER) <br> * Column 6, line 67 - column 7, line 10; figure 14 * <br><br> --- | 1,3 | |
| A | FR-A- 458 123 (ASHLEY) <br> * Page 2, lines 1-7,45-50; figures 1,2 * <br><br> ----- | 1,2 | **TECHNICAL FIELDS SEARCHED (Int. Cl.4)** <br><br> B 60 B |

The present search report has been drawn up for all claims

| Place of search | Date of completion of the search | Examiner |
|---|---|---|
| THE HAGUE | 23-06-1987 | AYITER I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82